Europäisches Patentamt

European Patent Office

Office européen des brevets

(19)

(11) Veröffentlichungsnummer : **0 593 492 B1**

(12) **EUROPÄISCHE PATENTSCHRIFT**

(45) Veröffentlichungstag der Patentschrift :
16.08.95 Patentblatt 95/33

(51) Int. Cl.⁶ : **H04B 3/40**

(21) Anmeldenummer : 92908754.2

(22) Anmeldetag : 12.05.92

(86) Internationale Anmeldenummer :
PCT/DE92/00392

(87) Internationale Veröffentlichungsnummer :
WO 93/01661 21.01.93 Gazette 93/03

(54) SCHALTUNGSANORDNUNG FÜR EINE LEITUNGSNACHBILDUNGSEINRICHTUNG.

(30) Priorität : 05.07.91 DE 4122730

(43) Veröffentlichungstag der Anmeldung :
27.04.94 Patentblatt 94/17

(45) Bekanntmachung des Hinweises auf die
Patenterteilung :
16.08.95 Patentblatt 95/33

(84) Benannte Vertragsstaaten :
CH DE FR GB IT LI

(56) Entgegenhaltungen :
DE-A- 1 282 721

(56) Entgegenhaltungen :
DE-C- 500 371
US-A- 1 533 178
ELEKTRONIK. Bd. 26, Nr. 5, Mai 1977, MUN-
CHEN DE Seiten 81 - 82; H. WÜSTNER: 'Künst-
liche Leitung zur Simulation von
Fernmeldekabeln'

(73) Patentinhaber : SIEMENS
AKTIENGESELLSCHAFT
Wittelsbacherplatz 2
D-80333 München (DE)

(72) Erfinder : MEYER, Stephan
Sprengelstra e 13
D-1000 Berlin 65 (DE)

EP 0 593 492 B1

## Beschreibung

Die Erfindung betrifft eine Schaltungsanordnung für eine Leitungsnachbildungseinrichtung zur Simulation der Übertragungseigenschaften von digitale Signale übertragenden Leitungen, insbesondere von in ISDN-Netzen betreibbaren Busleitungen.

Zur Untersuchung der Übertragungseigenschaften von Busleitungen in dem eingangs bezeichneten System, bestehend aus einem Netzabschluß, der Leitung und der daran angeschalteten Endgeräte, müssen die Übertragungsparameter der Leitung nachgebildet werden. Mit der Leitungsnachbildung ist somit eine naturgetreue Simulation der Übertragungseigenschaften von im System betriebenen Bussen, über die beispielsweise digitale Signale übertragen werden, möglich.

Die bisher bekannte CCITT-Richtlinie zur Leitungsnachbildung ist in bezug auf die diversen Bauformen der verwendeten Leitungen unvollständig, da die Leitungen vor allem bei Frequenzen oberhalb von 100 kHz sehr unterschiedliche Übertragungseigenschaften haben und lediglich bei einer Frequenz von 96 kHz entsprechend der CCITT-Richt linie Gleichartigkeit aufweisen.

Die der Erfindung zugrundeliegende Aufgabe besteht darin, eine Schaltungsanordnung anzugeben, mit der für die unterschiedlichen Bauformen der Leitungen in einfacher Weise Leitungsnachbildungen realisierbar sind. Erfindungsgemäß wird dies erreicht durch die folgenden Merkmale:

a) die Leitungsnachbildungseinrichtung enthält eine den ganzzahligen Teil der maximalen Länge der nachzubildenden Leitung entsprechende Anzahl von Teil-Leitungsnachbildungseinheiten, wobei die Teil-Leitungsnachbildungseinheiten jeweils eine bestimmte Teil-Leitungslänge nachbilden und die maximale Länge der nachzubildenden Leitung ausgedrückt wird in Vielfachen der Teil-Leitungslänge,

b) die Teil-Leitungsnachbildungseinrichtungen sind modular strukturiert und jeweils mit einem übertragergekoppelten, eingangsseitig mit einer ersten Kondensatoreinheit überbrückten Schaltteil A, einem übertragergekoppelten, an Mittenanzapfungen mit einer zweiten Kondensatoreinheit überbrückten Schaltteil B und einem in Leitungsebene den Gleichstromwiderstand ein- und ausgangsseitig mit je einer dritten Kondensatoreinheit überbrückenden Schaltteil C ausgestattet, das ausgangsseitig in spiegelbildlicher Reihenfolge mit einem weiteren Schaltteil B und einem sich anschließenden weiteren Schaltteil A verbunden ist,

c) die übertragergekoppelten Schaltteile A weisen jeweils einen der Induktivität aus der Windungszahl N1 parallelgeschalteten Längswiderstand (R1) bzw. (R3) auf,

d) die übertragergekoppelten Schaltteile B weisen jeweils einen der Induktivität aus den Windungszahlen N2 + N3 parallelgeschalteten weiteren Längswiderstand (R2) bzw. (R4) auf,

e) die parallelgeschalteten Längswiderstände sind gleichwertig,

f) die weiteren parallelgeschalteten Längswiderstände sind gleichwertig,

g) die erste Kondensatoreinheit und die dritte Kondensatoreinheit sind gleichwertig,

h) die zweite Kondensatoreinheit weist den doppelten Kapazitätswert der ersten Kondensatoreinheit auf.

Mit der erfindungsgemäß strukturierten Schaltungsanordnung lassen sich aus den vom Hersteller der Leitungen gemachten Angaben zum Widerstandsbelag $R^*$ (Ohm/km), zum Induktivitätsbelag $L^*$ (H/km) und zum Kapazitätsbelag $C^*$ (F/km) sämtliche Werte für die Widerstände, die Induktivitäten und die Kapazitäten für eine bestimmte Leitungsbauform mit den bekannten Mitteln der Evolutionsstrategie bestimmen. Nähere Einzelheiten hierzu sind dem Buch "Evolutionstrategie" von Ingo Rechenberg, Fromann-Holzboog, StuttgartCanstatt, 1973 und "VDI Fortschrittsberichte 1982", Martin Ruppert, zu entnehmen. Die unterschiedlichen Bauformen der Leitungen ergeben entsprechend unterschiedliche Kombinationen der Werte für die Widerstände R0, R1 bis R4, für die Induktivitäten L1, L2 und die Kapazitäten C1 bis C3, wobei jedoch die einzelnen Bauteile stets in der erfindungsgemäß strukturierten Anordnung zusammengefügt werden. Die Leitungsnachbildungen bilden somit die übertragungseigenschaften der unterschiedlichen Bauformen der Leitungen nach, so daß Messungen direkt an den Kabeltrommeln entfallen können.

Die aus der DE-PS 500 371 bekannte sogenannte Verlängerungsleitung ermöglicht dagegen nur ganzzahlige Vervielfachungen eines bestimmten Dämpfungswertes durch eine sogenannte Stammleitung, die beispielsweise zur Realisierung des doppelten Dämpfungswertes, zweifach hintereinandergeschaltet wird.

Als wesentlich für die Erfindung ist anzusehen, daß mit der Schaffung von standardisierten Teil-Leitungsnachbildungseinrichtungen, die sich jeweils auf eine bestimmte Länge der Leitung beziehen, durch eine entsprechende Vervielfältigung die Leitungsnachbildung in einfacher Weise für die unterschiedlichsten Leitungslängen realisierbar sind. In diesem Zusammenhang ist es auch denkbar, neben der Vervielfältigung der Teil-Leitungsnachbildungseinrichtungen auch deren Einzelwerte für die Widerstände, Induktivitäten und Kapazitäten durch entsprechende Schaltmaßnahmen veränderbar zu gestalten, so daß praktisch eine universielle Leitungsnachbildung für die verschiedenartigsten Bauformen der Leitungen mit den unterschiedlichsten Längen zur Verfügung steht.

Die im Ausführungsbeispiel dargestellte Schaltung setzt sich aus den drei unterschiedlichen Schaltteilen A, B und C zusammen, wobei das Schaltteil C ausgangsseitic in spiegelbildlicher Reihenfolge mit einem weiteren Schaltteil B und dem sich daran anschließenden Schaltteil A verbunden ist. Wie bereits erwähnt, sind aus den Herstellerangaben zum Widerstandsbelag R* (Ohm/km), Induktivitätsbelag L* (H/km) und zum Kapazitätsbelag C* (F/km) die jeweiligen Einzelwerte für die Widerstände, Kapazitäten und Induktivitäten der erfindungsgemäßen Schaltungsanordnung zu ermitteln. Für den Kapazitätsbelag C* gilt folgendes:

$$C^* \ (F/km) \times \frac{LE}{2} \ (km) \ = \ Cg \ = \ C1 \ + \ C2 \ + \ C3$$

Da C1 = C3 ist, ergibt sich für

$$C2 \ = \ Cg \ - \ (C1 \ + \ C3)$$

Für den Widerstandbelag R* besteht folgender Zusammenhang:

Ausgehend von einen Ersatzschaltbild mit einem Gleichstromwiderstand R0* in Reihe mit zwei Teilinduktivitäten L1* und L2*, denen die Wechselstromwiderstände R1* und R2* parallel geschaltet sind, ergibt sich

$$\underline{z} \ = \ R'_{(w)} \ + \ jwL'_{(w)}.$$

Mittels der Evolutionsstrategie lassen sich daraus der Gleichstromwiderrstand R0*, die Wechselstromwiderstände R1* und R2* und die Induktivitäten L1* und L2* ermitteln, wobei gilt:

$$\frac{R1^*}{wL1^*} \ \leqq \ \frac{R2^*}{wL2^*}$$

Für den Gleichstromwiderstand gilt:

$$R0^* \ = \ R0 - 1 \ + \ R0 - 2$$

Für die Wechselstromwiderstände gilt:

$$R1^* \ = \ 2R1 \ + \ 2R3$$
$$R2^* \ = \ 2R2 \ + \ 2R4$$

Für die Induktivitäten gilt:

$$L1^* \ = \ Lg \ = \ 2 \ (N_1 \ + \ N_1)^2 \ A1 \ = \ 2 \ (4 \ N_1^2 \ A1)$$
$$L2^* \ = \ Lg \ = \ 2 \ (N_2 \ + \ N_2 \ + \ N_3 \ + \ N_3)^2 \ A1$$

Sämtliche Einzelwerte beziehen sich auf eine einzige Teil-Leitungsnachbildungseinrichtung LE für eine ganz bestimmte Leitungslänge.

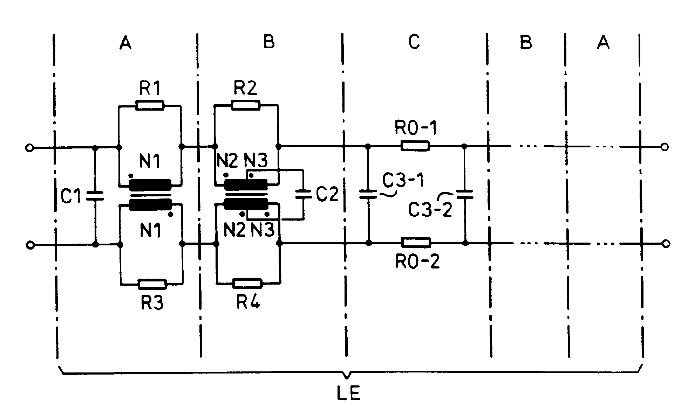

## Patentansprüche

1. Schaltungsanordnung für eine Leitungsnachbildungseinrichtung zur Simulation der Übertragungseigenschaften von digitale Signale übertragenden Leitungen, insbesondere von in ISDN-Netzen betreibbaren Busleitungen, **gekennzeichnet durch** die Merkmale

     a) die Leitungsnachbildungseinrichtung enthält eine dem ganzzahligen Teil der maximalen Länge der nachzubildenden Leitung entsprechende Anzahl von Teil-Leitungsnachbildungseinheiten (LE), wobei die Teil-Leitungsnachbildungseinheiten jeweils eine bestimmte TeilLeitungslänge nachbilden und die maximale Länge der nachzubildenden Leitung ausgedrückt wird in Vielfachen der Teil-Leitungslänge,

     b) die Teil-Leitungsnachbildungseinrichtungen (LE) sind modular strukturiert und jeweils mit einem übertragergekoppelten, eingangsseitig mit einer ersten Kondensatoreinheit (C1) überbrückten Schaltteil A, einem übertragergekoppelten, an Mittenanzapfungen mit einer zweiten Kondensatoreinheit (C2) überbrückten Schaltteil B und einem in Leitungsebene den Gleichstromwiderstand (R0-1, R0-2) ein- und ausgangsseitig mit je einer dritten Kondensatoreinheit (C3-1, C3-2) überbrückenden Schaltteil C ausgestattet, das ausgangsseitig in spiegelbildlicher Reihenfolge mit einem weiteren Schaltteil B und einem sich anschließenden weiteren Schaltteil A verbunden ist,

     c) die übertragergekoppelten Schaltteile A weisen jeweils einen der Induktivität aus der Windungszahl N1 parallelgeschalteten Längswiderstand (R1) bzw. (R3) auf,

     d) die übertragergekoppelten Schaltteile B weisen jeweils einen der Induktivität aus den Windungszahlen N2 + N3 parallelgeschalteten weiteren Längswiderstand (R2) bzw. (R4) auf,

     e) die parallelgeschalteten Längswiderstände (R1) und (R3) sind gleichwertig,

     f) die weiteren parallelgeschalteten Längswiderstände (R2) und (R4) sind gleichwertig,

     g) die erste Kondensatoreinheit (C1) und die dritte Kondensatoreinheit (C3) sind gleichwertig,

     h) die zweite Kondensatoreinheit (C2) weist den doppelten Kapazitätswert der ersten Kondensatoreinheit (C1) auf.

2. Schaltungsanordnung nach Anspruch 1, **gekennzeichnet durch**

     i) die Übertragerkopplung im Schaltteil A ist durch eine in jeder Leitungsebene angeordnete Spule mit der Induktivität des Übertragers ersetzt.

## Claims

1. Circuit arrangement for a line simulation device for the simulation of the transmission characteristics of lines carrying digital signals, in particular bus lines capable of being operated in integrated services digital networks (ISDN), **characterised by** the features

a) the line simulation device contains a number of partial line simulation units (LE) corresponding to the whole number part of the maximum length of the line to be simulated, where each partial line simulation unit forms a specific partial line length, and the maximum length of the line to be simulated is expressed in multiples of the partial line length,

b) the partial line simulation devices (LE) are of modular construction and each is fitted with a transformer-coupled circuit section A with input shunted by a first capacitor unit (C1), a transformer-coupled circuit section B shunted at centre tapping points by a second capacitor unit (C2), and with a circuit section C shunting the d.c. line resistance (R0-1, R0-2) at the input and output by means of a respective third capacitor unit (C3-1, C3-2), which circuit section C is connected at the output side to a further circuit section B and a subsequent circuit section A in a mirror-image arrangement.

c) the transformer-coupled circuit sections A each have a series resistor (R1) or (R3), respectively, connected in parallel with the inductance due to the number of windings N1,

d) the transformer-coupled circuit sections B each have a further series resistor (R2) or (R4), respectively, connected in parallel with the inductance due to the number of windings N2 + N3,

e) the parallel-connected series resistors (R1) and (R3) have identical values,

f) the additional parallel-connected series resistors (R2) and (R4) have identical values,

g) the first capacitor unit (C1) and the third capacitor unit (C3) have identical values,

h) the second capacitor unit (C2) has twice the capacitance value of the first capacitor unit (C1).

2. Circuit arrangement according to Claim 1, **characterised by**

i) the transformer coupling in the circuit section A is replaced by a coil having the inductance of the transformer and arranged in each line leg.

**Revendications**

1. Montage pour un dispositif de simulation de lignes pour simuler les caractéristiques de transmission de lignes transmettant des signaux numériques, notamment de lignes formant bus pouvant fonctionner dans des réseaux ISDN, caractérisé par les particularités suivantes

   a) le dispositif de simulation de lignes comporte un nombre d'unités de simulation de lignes partielles (1), qui correspond à la longueur maximale de la ligne à simuler, les unités de simulation de lignes partielles simulant respectivement une longueur de ligne partielle déterminée, et la longueur maximale de la ligne devant être simulée étant exprimée par des multiples de la longueur de ligne partielle,

b) les unités de simulation de lignes partielles (LE) sont structurées de façon modulaire et sont pourvues chacune d'une partie de commutation A, qui est couplée par un transformateur et est shuntée côté entrée par une première unité formant condensateur (C1), et une partie de commutation B, qui est couplée par un transformateur et est shuntée au niveau de prises médianes avec une seconde unité formant condensateur (C2), et une partie de commutation C qui, dans le plan des lignes, shunte côté entrée et côté sortie la résistance en courant continu (R0-1, R0-2) avec respectivement une troisième unité formant condensateur (C3-1, C3-2), et qui est reliée côté sortie, selon une succession symétrique, à une autre partie de commutation B et à une autre partie de commutation A qui s'y raccorde,

c) les parties de commutation A, couplées par un transformateur possèdent chacune une résistance longitudinale (R1) ou (R3), qui est branchée en parallèle avec l'inductance comportant un nombre N1 de spires, et

d) les parties de commutation B, couplées par un transformateur possèdent chacune une autre résistance longitudinale (R2) ou (R4), branchée en parallèle avec l'inductance formée par les nombres N2+N3 de spires,

e) les résistances longitudinales (R1) et (R3) branchées en parallèle, possèdent la même valeur,

f) les autres résistances longitudinales (R2) et (R4) branchées en parallèle possèdent la même valeur,

g) la première unité formant condensateur (C1) et la troisième unité formant condensateur (C3) possèdent la même valeur,

h) la seconde unité formant condensateur (C2) possède une capacité égale ou double de celle de la première unité formant condensateur (C1).

2. Montage suivant la revendication 1, caractérisé par le fait que

i) le couplage par un transformateur dans la partie de commutation A est remplacé par une bobine, qui est disposée dans chaque plan des lignes et qui possède l'inductance du transformateur.